# EUROPEAN PATENT APPLICATION

(11) **EP 2 642 057 A2**
(43) Date of publication of application: **25.09.2013**
(21) Application number: 13000891.5
(22) Date of filing: 22.02.2013
(51) Int. Cl.: E05F 15/14

(54) **Actuator device for actuating a sliding gate and the like**

(30) Priority: 20.03.2012 IT MI20120112
(71) Applicant: Skygates S.R.L., 27020 Dorno (Pavia) (IT)
(72) Inventor: Calvi, Paolo, 26014 Romanengo (Cremona) (IT)
(74) Representative: Forattini, Amelia

(57) **Abstract**

An actuator device for actuating a sliding gate and the like, includes a motor assembly which is associated with a fixed structure and is adapted to cooperate with a flexible member associated with a movable leaf; the flexible member is constituted by a toothed belt which extends substantially along the entire extension of the upper edge of the leaf.

## Description

The present invention relates to an actuator device for actuating a sliding gate and the like.

As is known, gates with sliding leaves are generally provided with a movement mechanism which is actuated electrically by means of a remote control and/or a key.

Generally, in known types of electric gate, the leaf is provided with free wheels, which can slide on a rail which is fixed to the ground, and is also provided with a rack which is parallel to the rail and is engaged by a pinion which is keyed to the output shaft of a gearmotor, which is fixed to the ground.

The rack-type actuator device has drawbacks which are mostly related to the fact that the correct movement of the leaf requires a perfectly parallel arrangement between the rack and the ground rail and can be compromised by deformations or losses of straightness of the rail.

Therefore, the installation and the maintenance of the rack system is complicated.

The aim of the present invention is to provide an actuator device, for sliding electric gates and other similar structures, which overcomes the drawbacks of the traditional rack system and of other conventional systems.

Within the scope of this aim, an object of the invention is to provide an actuator device that is very quick and easy to install.

An important object of the present invention is to provide a device that can be manufactured easily by using commonly commercially available elements and materials and is also competitive from an economic standpoint.

Another object is to provide a device that can also be applied to existing structures.

Another object of the present invention is to provide a device which, by virtue of its particular constructive characteristics, is capable of giving the greatest assurances of reliability and safety in use.

This aim and these and other objects that will become better apparent hereinafter are achieved by an actuator device, for actuating a sliding gate and the like, **characterized in that** it comprises a motor assembly which is associated to a fixed structure and is adapted to cooperate with a flexible member which is associated with a movable leaf of a gate.

The flexible member is constituted by a toothed belt which extends substantially along the upper edge of the movable leaf.

Further characteristics and advantages will become better apparent from the description of the structure according to the invention, illustrated by way of nonlimiting example in the accompanying drawings, wherein:

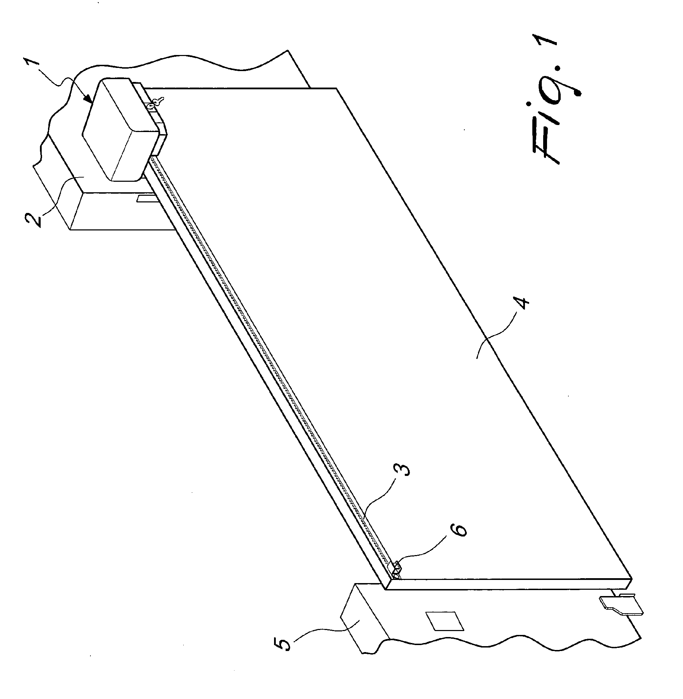

Figure 1 is a perspective view of a sliding gate provided with the actuator device according to the present invention;

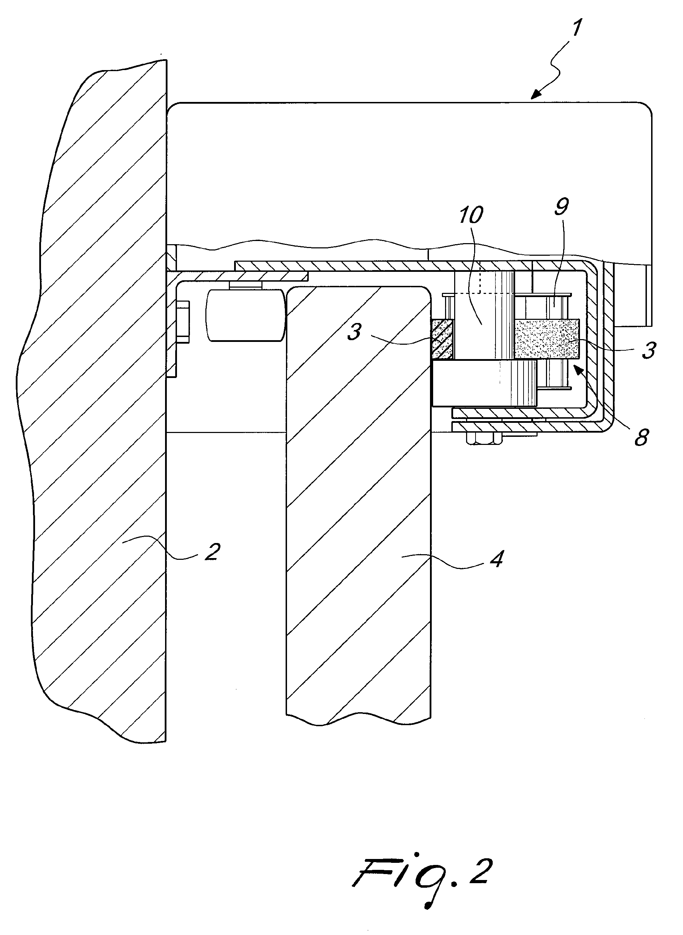

Figure 2 is a transverse sectional elevation view of the actuator device;
Figure 3 is a partially sectional plan view of the gate, in the closed position;
Figure 4 is a view, similar to the preceding one, showing the gate in the open position;

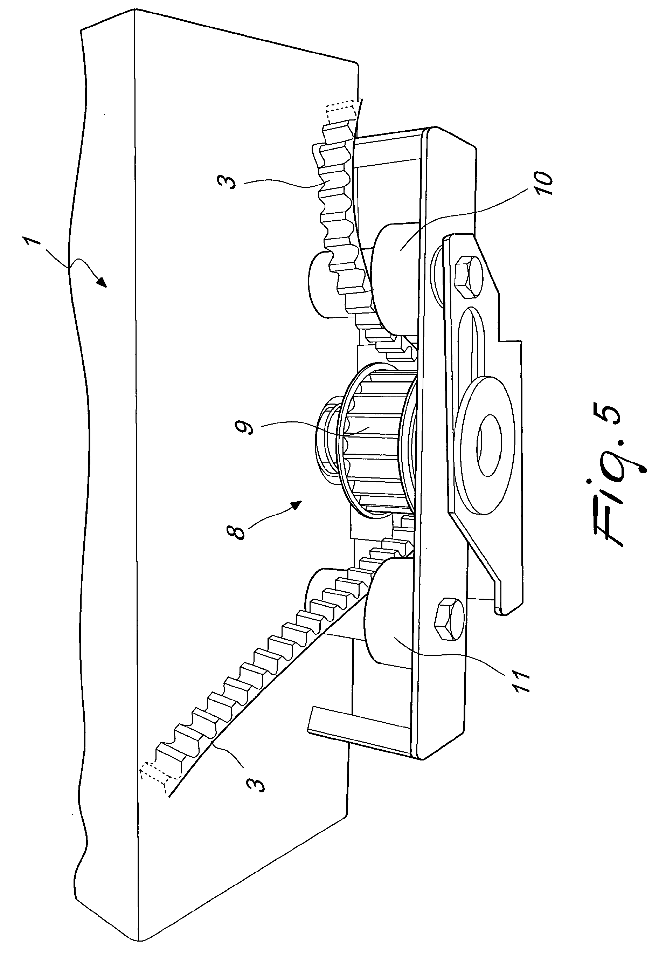

Figure 5 is a bottom perspective view of the transmission assembly.

With reference to the cited figures, the actuator device for actuating a sliding gate and the like, according to the invention, comprises a motor assembly 1 which is associated with a fixed structure 2 and is adapted to cooperate with a flexible member 3, which is associated with a movable leaf 4.

The movable leaf 4 is, for example, a gate adapted to block an opening formed between the fixed structure 2 and a post 5.

The fixed structure 2 and the post 5 can be typically the ends of a wall or fence, which form an opening that it is desirable to close with a remotely controlled sliding gate.

According to the present invention, the flexible member 3 can be constituted by a toothed belt, or other flexible member, which is arranged substantially along the entire extension of the leaf 4 and preferably at its upper edge.

The toothed belt 3 is fixed at its ends by means of anchoring members, respectively designated by the reference numerals 6 and 7, which are associated with the ends of the leaf 4.

According to the present invention, the actuator device comprises a drive assembly 8, which is actuated by the motor assembly 1 and is associated therewith.

The drive assembly 8 has a pinion 9, which is actuated by the motor assembly 1 and is flanked by a pair of free wheels 10 and 11.

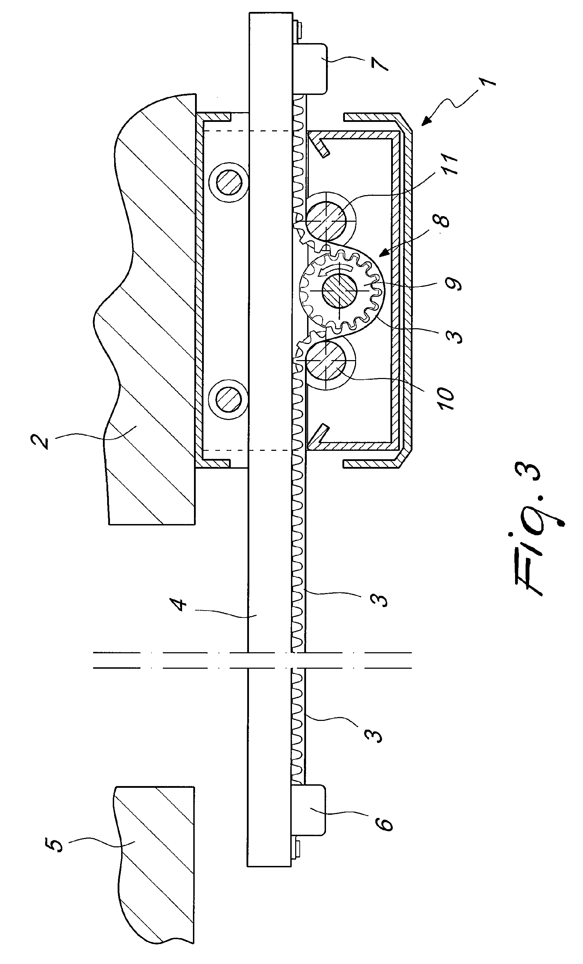

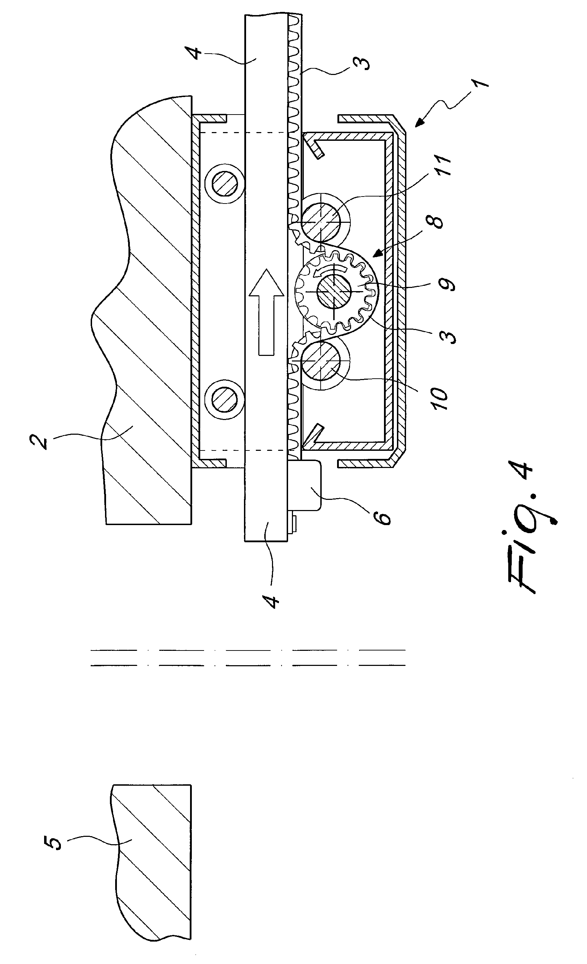

The drive assembly 8 is mounted below the motor assembly 1 in such a manner that the pinion 9 is arranged between the toothed belt 3 and the leaf 4, exploiting the flexibility and elasticity of the toothed belt, as can be seen in detail in Figures 3 and 4.

The wheels 10 and 11 keep the toothed belt 3 flush with the leaf 4, upstream and downstream of the pinion 9.

By turning the pinion 9, by means of the action of the motor assembly 1, the toothed belt 3 slides with respect to the pinion 9, which is associated with the fixed structure 2, causing the sliding of the leaf 4, which is instead associated with the toothed belt 3.

The toothed belt can be replaced with other flexible members, such as a steel cable or cord, for example, with a corresponding actuation pulley, instead of the pinion.

The system is controlled by an electronic controller which allows the management of all the steps and functions, controlling the stroke, the automatic closure time, the speed of the stroke and its slowing, the thrust of the motor and the transmitter code.

The gate provided with the actuator device according to the present invention of course includes all the safety devices that are typical of this type of apparatus.

For example, a release key, in case of emergency, disengages the transmission of the motor to the gate, allowing to move the gate manually, and avoids any accidental electrical function.

A stroke limiter of the belt, which is mounted on the gate and intervenes when it is reached, interrupting the motion. The stroke limiter may be substituted with another device with a similar function.

An obstacle detector, integrated in the electric controller, monitors the current absorption of the motor, interrupting the motion.

A flashing luminous sign is activated during the movement of the gate.

Fuses, installed in the controller, preserve the integrity of the circuits and of the component, and there are fixed enclosures constituted by protective housings.

The gate can be provided with the above cited devices or with others which are typical of apparatuses of this kind.

In practice it has been found that the invention achieves the intended aim and objects, providing an actuator device that is particularly suitable for moving sliding gates in a residential, condominium and industrial environment and is cheaper and easier to install than traditional rack-type movement systems.

The present actuator device renders the structure less sensitive to impacts and to any deformations.

The materials and the dimensions may of course vary according to the requirements and the state of the art.

## Claims

1. An actuator device for actuating a sliding gate and the like, **characterized in that** it comprises a motor assembly which is associated with a fixed structure and is adapted to cooperate with a flexible member associated to a movable leaf.

2. The device according to claim 1, **characterized in that** said flexible member is constituted by a toothed belt which extends substantially along the entire extension of an upper edge of said leaf.

3. The device according to claim 2, **characterized in that** said toothed belt is fixed at its ends by means of anchoring systems which are associated with the ends of said leaf.

4. The device according to claim 3, **characterized in that** it comprises a drive assembly which is actuated by said motor assembly and is associated therewith; said drive assembly comprising a pinion, which is actuated by said motor assembly and is flanked by a pair of free wheels; said drive assembly being mounted below said motor assembly and so that said pinion is arranged between said toothed belt and said leaf, exploiting the flexibility and elasticity of said toothed belt.

5. The device according to claim 4, **characterized in that** said wheels keep said toothed belt flush with said leaf, upstream and downstream of said pinion.

6. The device according to claim 5, **characterized in that** the rotation of said pinion causes said toothed belt to move with respect to said pinion, which is associated with said fixed structure, causing the sliding of said leaf, which is associated with said toothed belt.

7. The device according to one or more of the preceding claims, **characterized in that** it comprises an electronic controller which allows the management of all the steps and functions, controlling the stroke, the automatic closure time, the speed of the stroke and its slowing, the thrust of the motor and the transmitter code.

8. The device according to one or more of the preceding claims, **characterized in that** it comprises safety devices which comprise a key for release in case of emergency, which disengages the transmission of the motor to the gate, allowing to move said gate manually, and avoids any accidental electrical function; a belt stroke limiter, which is mounted on the gate and intervenes when it is reached, interrupting the movement; an obstacle detector, which is integrated in the electric controller and monitors the current absorption of the motor, interrupting the movement; a flashing luminous sign, which is activated during the movement of the gate; fuses, which are installed on the controller in order to preserve the integrity of the circuits and of the component; fixed enclosures constituted by protective housings.

9. The device according to one or more of the preceding claims, **characterized in that** said movable leaf constitutes a gate or the like adapted to obstruct an opening formed between said fixed structure and a post.
